# EUROPEAN PATENT APPLICATION

(11) **EP 1 392 040 A2**
(43) Date of publication of application: **25.02.2004**
(21) Application number: 03255211.9
(22) Date of filing: 22.08.2003
(51) Int. Cl.: H04M 1/60

(54) **Communication apparatus with one-way speakerphone function**

(30) Priority: 23.08.2002 KR 2002049960
(71) Applicant: SAMSUNG ELECTRONICS CO., LTD., Suwon-City, Kyungki-do (KR)
(72) Inventor: Jeon, Cheol-min, Paldal-gu, Suwon-city, Gyunggi-do (KR)
(74) Representative: Geary, Stuart Lloyd

(57) **Abstract**

A communication apparatus having a one-way speakerphone function including a handset connected to the communication apparatus by a transmit-receive line, wherein the transmit-receive line is enabled when the handset of the communication apparatus is off-hook; a speaker outputting a sound of the handset communication; an input key part including a selection key for the one-way speakerphone function and a plurality of dial keys; and a central control device controlling the one-way speakerphone function; wherein a conversation signal is transmitted through the speaker when the handset is off-hook, the one-way speakerphone function selection key signal is input, and it is determined that a dialing is completed .

## Description

The present invention relates to a telephonic communication apparatus comprising interface means for connecting the apparatus to a telephone network, a handset having a speaker and a microphone for voice communication via the interface means, a loudspeaker, control means, switching means, responsive to the control means, for selectively routing audio signals from the interface means to the loudspeaker and dialling signal generating means for outputting dialling signals via the interface means.

Communication apparatuses such as telephones, key-phones, facsimile machines and a multi-function peripherals (MFP) are communications terminals for communicating voice, documents, images etc. These devices are used as office automation machines for transmitting or receiving the information using a public telephone network. The recently developed MFP integrates the functions of several office automation machines, such as facsimile machines, printers, scanners, photocopiers etc., into one unit.

In this specification, the term "communication apparatus" means, but not exclusively, telephones, facsimile machines and MFPs. Such a communication apparatus generally has a handset so that a user can transmit and receive data using the handset. When the handset is taken off-hook by the user, the user may talk with a person or machine at the other end of the connection. When the handset is placed back in its cradle, the voice channel is terminated.

Also, a user may use a speaker attached to the communication apparatus for a speakerphone function. The speakerphone function enables a user to converse with the other party using the speaker and a microphone attached the communication apparatus without needing to hold the handset. This speakerphone function also includes a one-way speakerphone function, in which the user uses the handset, rather than the separate microphone, with the speaker.

The one-way speakerphone function is to allow a other people around the user to hear the conversation between the user and the other party while the user is using the handset. However, since the output of the speaker is detected by the microphone in the handset, feedback can be a problem.

A telephonic communication apparatus according to the present invention is characterised in that the control means is configured such that, at the start of a call originating from the apparatus, the switching means is not operated to route audio signals from the interface means to the loudspeaker until the dialling signal generating means has completed its outputting of dialling signals.

Preferably, the apparatus includes user input means and the control means is responsive to operation of the user input means to cause the switching means to route audio signals from the interface means to the loudspeaker.

An embodiment of the present invention will now be described, by way of example, with reference to the accompanying drawings, in which:
Figure 1 is a block diagram showing a communication apparatus according to the present invention; and
Figure 2 is a flowchart showing a method of controlling the communication apparatus of Figure 1.

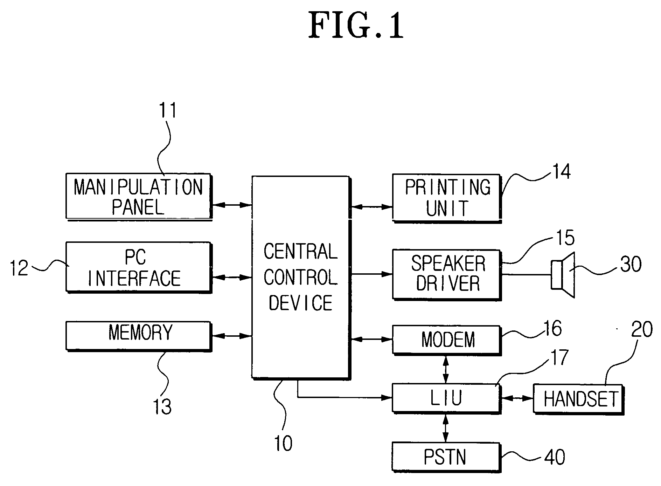

Referring to Figure 1, an MFP-type communication apparatus includes a central control device 10, a control panel 11, a PC interface 12, a memory 13, a printing unit 14, a speaker driver 15, a modem 16, a line interface unit (LIU) 17 and a handset 20.

The central control device 10 controls the general operations of the communication apparatus according to information input from outside and a stored program.

The control panel 11 includes an input key part, having a one-way speakerphone function selection key and a dial key, and a display part for displaying the operational state of the communication apparatus. The control panel 11 allows a user to both input commands and confirm them.

The memory 13 stores a program that is necessary for the operation of the communication apparatus and various data that is used during the operation of the communication apparatus. The program includes the control codes for performing the one-way speakerphone function of outputting the transmitted and received voice signals through a speaker when the handset 20 is off-hook, a one-way speakerphone function key has been pressed and it is determined that dialling is completed. In this embodiment, the memory 13 comprises a ROM and a DRAM.

The speaker driver 15 is connected to a speaker 30 for transmitting and outputting a dial tone and a voice signal through the speaker 30.

The modem 16 performs coding and decoding of image data for communication and detects the dial tone when a call is to be made. The LIU 17 interfaces a public network, which is called PSTN 40 hereinafter, and the modem 16 for the communication with a remote station. The LIU 17 opens or blocks the transmit/receive line of the handset 20, under the control of the central control device 10, and allows the transmitted and received voice signals to be output through the speaker 30, according to the one-way speakerphone function selection key signal.

The handset 20 is mounted on the body of the communication apparatus and includes a speaker part and a microphone part for allowing a user to communicate with another party . When the handset 20 is taken off-hook by the user, the transmit/receive line is opened so that the voice signals can be transmitted and received and any dial tone can be received. When the handset 20 is placed back on the body of the communication apparatus, thus returning it to on-hook, the transmit/receive line is blocked.

The PC interface 12 interfaces the communication apparatus and a PC for the transmission of information therebetween. The printing unit 14 prints data scanned according to a copying command, data transmitted to a facsimile or data transmitted from the PC.

The communication apparatus according to the present invention includes a speakerphone function, a one-way speakerphone function, and an on-hook dialing function.

The speakerphone function allows a user to communicate with the opposite party through the speaker 30 and the microphone attached to the communication apparatus body without using the handset 20. The speakerphone function includes the one-way speakerphone function. The one-way speakerphone function allows a people around the user to hear the conversation between the user and the opposite party while the user is using the handset 20. When the one-way speakerphone function selection key signal is input, a speaker line is opened along with the transmit/receive line of the handset 20 being opened, so that a transmit/receive signal flowing through the handset 20 is also output through the speaker.

The on-hook dialling (OHD) function allows the user to dial another party with the handset 20 being on-hook. When the other party replies, the signal comes through the speaker 30, and the user is then able to use the handset 20 to communicate with the other party.

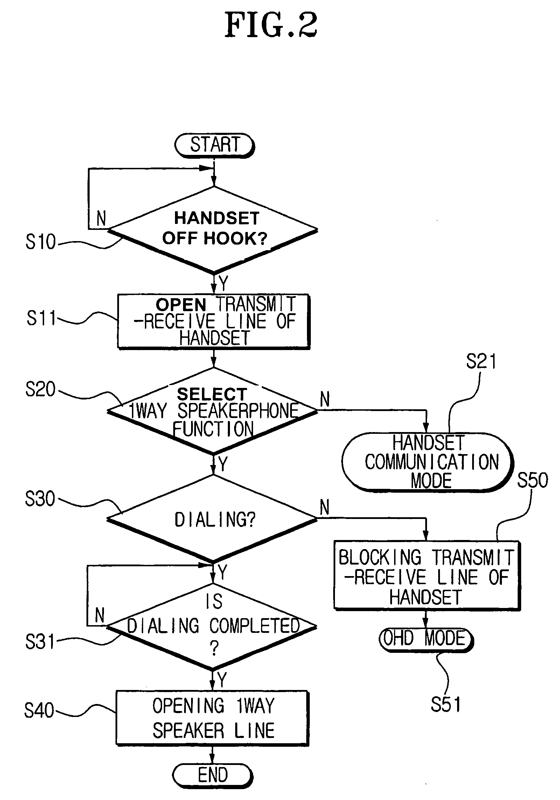

Referring to Figure 2, when a user picks up the handset 20, thereby inputting an off-hook signal (S10), the central control device 10 controls the LIU 17 to open the transmit/receive line of the handset 20 (S11). Then, through the opened transmit/receive line of the handset 20, voice and dial tone signals can be transmitted and/or received.

When it is detected that the handset 20 is off-hook and the one-way speakerphone function selection key signal has been pressed (S20), it is then determined whether or not a dial key signal has been input by the user (S30). If the one-way speakerphone function selection key signal has not been input within a predetermined time in S20, the communication apparatus is switched to a handset communication mode and performs communication using the handset (S21).

When it is determined that the dial key signal has been pressed within a predetermined time in S30, it is then determined whether or not dialling is completed. Dialling is determined to be completed when a next dial key press does not take place within a predetermined time after the most recent dial key press. When it is determined that the dialling is complete, the speaker line is opened to perform the one-way speakerphone function of outputting the transmit/receive signal through the speaker. The speaker line is blocked until the dialling is completed, so that the dial tone is not output through the speaker.

If the dial key signal is not pressed within the predetermined time, the transmit/receive line of the handset 20 is blocked and the communication device is switched to the on-hook dial mode, in which a user dials with the transmit/receive line of the handset 20 blocked and then a conversation signal is output through the speaker.

Accordingly, during the performance of the one-way speakerphone function, the dial tone output from the speaker is not input to the handset 20.

The communication apparatus according to the present invention prevents howling by preventing the dial tone from being output through the speaker during the performance of the one-way speakerphone function.

The hardware included in the system may include memories, processors, and/or Application Specific Integrated Circuits ("ASICs"). Such memory may include a machine-readable medium on which is stored a set of instructions (i.e., software) embodying any one, or all, of the methodologies described herein. Software can reside, completely or at least partially, within this memory and/or within the processor and/or ASICs. For the purposes of this specification, the term "machine-readable medium" shall be taken to include any mechanism that provides (i.e., stores and/or transmits) information in a form readable by a machine (e.g., a computer). For example, a machine-readable medium includes read only memory ("ROM"), random access memory ("RAM"), magnetic disk storage media, optical storage media, flash memory devices, electrical, optical, acoustical, or other form of propagated signals (e.g., carrier waves, infrared signals, digital signals, etc.), etc.

Although a few embodiments of the present invention have been shown and described, it would be appreciated by those skilled in the art that changes may be made in this embodiment.

## Claims

1. A telephonic communication apparatus comprising:
interface means (17) for connecting the apparatus to a telephone network (40);
a handset (20) having a speaker and a microphone for voice communication via the interface means (17);
a loudspeaker (30);
control means (10);
switching means (10), responsive to the control means (10), for selectively routing audio signals from the interface means (17) to the loudspeaker (30); and
dialling signal generating means (10, 11) for outputting dialling signals via the interface means (17),
**characterised in that**
the control means (10) is configured such that, at the start of a call originating from the apparatus, the switching means (10) is not operated to route audio signals from the interface means (17) to the loudspeaker (30) until the dialling signal generating means (10, 11) has completed its outputting of dialling signals.

2. An apparatus according to claim 1, including user input means (11), wherein the control means (10) is responsive to operation of the user input means (11) to cause the switching means (10) to route audio signals from the interface means (17) to the loudspeaker (30).

3. A communication apparatus having a one-way speakerphone function comprising:
a handset connected to the communication apparatus by a transmit-receive line, wherein the transmit-receive line is enabled when the handset of the communication apparatus is off-hook;
a speaker outputting a sound of the handset communication; an input key part comprising a selection key for the one-way speakerphone function and a plurality of dial keys; and
a central control device controlling the one-way speakerphone function;
wherein a conversation signal is transmitted through the speaker in response to the handset being off-hook, the one-way speakerphone function selection key signal being input, and dialing being completed.

4. The communication apparatus having a one-way speakerphone function of claim 3, wherein when the dial key signal is not input within a predetermined time of the handset being off-hook and with the one-way speakerphone function selection key signal being input, the central control device switches to an on-hook dial mode in which a user dials with the handset being on-hook, and the conversation signal is output through the speaker.

5. A method of controlling a communication apparatus having a one-way speakerphone function, the method comprising :
detecting whether a handset, which is connected to the communication apparatus through a transmit/receive line, is off-hook;
detecting whether a signal of a one-way speakerphone function selection key in an input key part of the communication apparatus is input;
opening the transmit-receive line of the handset when detected that the handset is off-hook and the one-way speakerphone selection key signal is input;
detecting whether a signal of a dial key in the input key part is input within a predetermined time;
determining whether a dialing is completed; and
upon determining that the dialing has been completed, opening a line connected to a speaker of the communication apparatus and performing a one-way speakerphone function to output a sound through the speaker during the handset conversation.

6. The method of controlling a communication apparatus having a one-way speakerphone function of claim 5, further comprising switching to an on-hook dial mode when the dial key signal is not input within the predetermined time, in which a user dials with the transmit-receive line of the handset being blocked and with the handset being on-hook, and then a conversation signal is output through the speaker.

7. The method of controlling a communication apparatus having a one-way speakerphone function of claim 5, wherein the dialing is determined to be completed when a next dial key signal is not input within a predetermined time after a current dial key signal is input.

8. A communication apparatus having a one-way speakerphone function comprising:
a handset connected to the communication apparatus by a transmit-receive line;
a speaker; and
a control device controlling the one-way speakerphone function;
wherein a signal is not transmitted through the speaker until a dialing has been completed.

9. The communication apparatus of claim 8, wherein the transmit-receive line is enabled when the handset is off-hook.

10. The communication apparatus of claim 9, further comprising an input key part comprising a selection key for the one-way speakerphone function and a plurality of dial keys.

11. The communication apparatus of claim 10, wherein a conversation signal is transmitted through the speaker when the handset is off-hook and the one-way speakerphone function key is selected.

12. The communication apparatus of claim 10, wherein the control device switches to an on-hook dial mode when the one-way speakerphone function key is selected and a dial key signal is not input within a predetermined time of the handset being off-hook.

13. The communication apparatus of claim 12, wherein the conversation signal is output through the speaker, with the handset being on-hook, when operating in the on-hook dial mode.

14. The communication apparatus of claim 8, wherein a line interface unit opens or blocks the transmit-receive line of the handset, and allows a transmit-receive signal to be output through the speaker, under control of the control device.

15. The communication apparatus of claim 8, further comprising a personal computer interface coupling a personal computer to the control device.

16. The communication apparatus of claim 15, wherein the personal computer interface interfaces the communication apparatus and the personal computer to transmit information therebetween.

17. The communication apparatus of claim 8, further comprising a memory device that stores user data and a program for the control device.

18. The communication apparatus of claim 17, wherein the memory device comprises a ROM and a DRAM.

19. A method of controlling a communication apparatus having a one-way speakerphone function, the method comprising:
opening a transmit-receive line of a handset connected to the communication apparatus when the handset is taken off-hook;
determining whether a one-way speakerphone mode has been selected; and
upon determining that a dialing has been completed, opening a line connected to a speaker of the communication apparatus and performing the one-way speakerphone function to output a sound through the speaker during the handset conversation.

20. The method of controlling a communication apparatus having a one-way speakerphone function of claim 19, wherein the dialing is determined to be completed when a next dial key signal is not input within a predetermined time after a current dial key signal is input.

21. The method of controlling a communication apparatus having a one-way speakerphone function of claim 19, further comprising switching to an on-hook dialing mode when a dial key signal is not input within a predetermined time after the handset is taken off-hook and the one-way speakerphone mode has been selected.

22. The method of controlling a communication apparatus having a one-way speakerphone function of claim 21, wherein the on-hook dialing mode allows a user to communicate with another party through the speaker while the handset is on-hook.

23. A machine-readable storage storing information enabling a device to perform a process of controlling a communication apparatus, the process comprising:
opening a transmit-receive line of a handset connected to the communication apparatus when the handset is taken off-hook;
determining whether a one-way speakerphone mode has been selected; and
upon determining that a dialing has been completed, opening a line connected to a speaker of the communication apparatus and performing the one-way speakerphone function to output a sound through the speaker during the handset conversation.
